# EUROPÄISCHE PATENTANMELDUNG

(11) **EP 2 579 228 A1**
(43) Veröffentlichungstag der Anmeldung: **10.04.2013**
(21) Anmeldenummer: 12176651.3
(22) Anmeldetag: 17.07.2012
(51) Int. Cl.: G08G 1/0962, G06K 9/00, G01C 21/36

(54) **Verfahren und System zur Erstellung einer digitalen Abbildung eines Fahrzeugumfeldes**

(30) Priorität: 12.09.2011 DE 102011082477
(71) Anmelder: Robert Bosch GmbH, 70442 Stuttgart (DE)
(72) Erfinder: Sans Sangorrin, Jorge, 70469 Stuttgart (DE); Mielenz, Holger, 73760 Ostfildern (DE)

(57) **Zusammenfassung**

Die vorliegende Erfindung betrifft ein System sowie ein Verfahren zur Erstellung einer digitalen Abbildung eines Fahrzeugumfeldes (U), insbesondere für Fahrerassistenzsysteme und autonomes Fahren. Hierzu werden mit einem fahrzeugbasierten ersten Sensorsystem (2) Messdaten zum Fahrzeugumfeld (U) und mit einem fahrzeugbasierten Video-System (3) mindestens eine fest im Fahrzeugumfeld (U) angeordnete und optisch erfassbare Markierung (4) aufgenommen. Dabei wird mindestens ein optisch erfassbares Charakteristikum (5) der mindestens einen Markierung (4) aus den Aufnahmedaten des Video-Systems (3) erkannt, und die relative Position und Ausrichtung der Markierung (4) zum Fahrzeugumfeld (U) ermittelt.

## Beschreibung

### Stand der Technik

Moderne Fahrzeuge orientieren sich unter Zuhilfenahme verschiedener Sensoren in ihrer Umwelt, wobei Datensätze ermittelt werden, anhand derer im Bedarfsfall Warnsignale ausgegeben werden, Fahrerassistenzsysteme Bedienschritte vorschlagen oder diese selbstständig vornehmen oder Fahrmanöver automatisch durchgeführt werden (z.B. Einparkhilfe). Hierbei können die eingesetzten Sensoren jeweils nur ein unvollständiges Abbild des Fahrzeugumfeldes ermitteln, da sie auf ihr jeweiliges Wirkprinzip beschränkt sind und dieses unterschiedliche Fehlereinflüsse erlauben kann. Einerseits ist es möglich, dass zeitlich begrenzte Störungen (z.B. elektromagnetische Impulse, Verschmutzungen des Sensors) ganze Datensätze unbrauchbar machen, andererseits ist es möglich, dass einzelne Bereiches des Sensors vorübergehend oder dauerhaft schadhaft sind (z.B. ausgefallene Pixel eines optischen Sensors). Eine weitere Fehlerquelle ist das Sensorrauschen, durch welches stochastische Verteilungen von Fehlern über den gesamten Datenbereich eines erfassten Datensatzes entstehen.

DE 10 2004 047 122 A1 schlägt ein Verfahren zum Überwachen eines Fahrzeugs vor, wobei die Umwelt des Fahrzeugs mit Sensoren erfasst wird, deren Daten fusioniert und in ein Umweltmodell überführt werden. Bei paralleler Verarbeitung von Daten verschiedener Sensoren gehen alle Sensordaten in die Fusion ein. Alternativ wird vorgeschlagen, die mittels verschiedener Sensoren ermittelten Daten einander ergänzend zu verwenden, wobei beispielsweise ein mittels eines ersten Sensors erfasstes Hindernis mittels eines zweiten Hindernisses nicht vollständig erfasst, sondern seine Existenz lediglich verifiziert bzw. falsifiziert wird.

DE 10 2008 041 679 A1 schlägt ein Verfahren sowie eine Vorrichtung zur Umfelderkennung für ein sich bewegendes System vor, wobei einzelne Objekte oder Merkmale des Umfeldes zu mindestens zwei Zeitpunkten erkannt und Fehlereinflüsse zwischen zwei aufeinanderfolgend generierten Datensätzen erkannt bzw. korrigiert werden.

Es ist eine Aufgabe der vorliegenden Erfindung, ein verbessertes Verfahren sowie eine verbesserte Vorrichtung zur Reduktion von Fehlereinflüssen in aufgenommenen Datensätzen eines Systems zur Fahrzeugumfelderkennung bereitzustellen. Insbesondere ist es eine Aufgabe der vorliegenden Erfindung, die Gesamtkomplexität, den Rechenaufwand sowie die notwendigen Ressourcen eines solchen Verfahrens bzw. einer solchen Vorrichtung zu verringern sowie die Zuverlässigkeit der erfassten Daten zu erhöhen.

### Offenbarung der Erfindung

Die vorliegende Erfindung löst die vorstehend genannten Aufgaben durch ein Verfahren mit den Merkmalen gemäß Anspruch 1 sowie ein System mit den Merkmalen gemäß Anspruch 4.

Unter einer "digitalen Abbildung" im Sinne der vorliegenden Erfindung sei ein Datensatz verstanden, aus welchem sich Informationen über die Umgebung eines Fahrzeuges hinsichtlich der Abstände einzelner Punkte zum Fahrzeug bzw. zur Fahrzeugkontur sowie weitere für die Fortbewegung des Fahrzeugs relevante Informationen über die Fahrzeugumgebung ermitteln lassen. Insbesondere Gestalt, Höhe und Abstand nahegelegener Objekte sollten hierbei vorzugsweise aus den Daten ermittelt werden können. Hierzu umfasst das fahrzeugbasierte erste Sensorsystem gemäß der vorliegenden Erfindung mindestens einen Sensor, welcher Signale zur Ermittlung der vorgenannten Daten liefern kann. Bekannte Sensortypen, welche für die Verwendung in dem ersten Sensorsystem in Frage kommen, sind beispielsweise Radar-, Lidar- und Ultraschallsensoren sowie Laserscanner. Ebenso ist eine Umgebungserkennung mittels Infrarotkameras und/oder Videosensoren bzw. Videokameras möglich, wobei bekannte Verfahren zur Entfernungsbestimmung wie Stereoskopie und Triangulation Verwendung finden können. Erfindungsgemäß ist mindestens ein fahrzeugbasiertes Videosystem vorgesehen, mittels welchem das Fahrzeugumfeld zumindest innerhalb eines vorgegebenen Sektors optisch erfasst und die herbei ermittelten Daten gespeichert werden. Theoretisch könnte als Videosystem gemäß der vorliegenden Erfindung auch ein für andere Zwecke verwendetes Videosystem (wie beispielsweise Verkehrsschilderkennung, Erkennung der Fahrbahnmarkierungen) zum Einsatz kommen. Die ermittelten Daten des Videosystems werden daraufhin untersucht, ob eine geeignete, optisch erfassbare Markierung darin enthalten ist, welche beispielsweise ein Verkehrsschild, welches auf eine Geschwindigkeitsbegrenzung, eine Gefahrenstelle oder eine Vorfahrtsregelung hinweist, sowie eine Ampel, ein KFZ-Kennzeichen eines parkenden PKW oder ein anderes Objekt sein kann. Ist eine solche Markierung in den aufgezeichneten Daten erkannt worden, kann aus den Aufnahmedaten des Videosystems mindestens ein optisch erfassbares Charakteristikum der Markierung identifiziert und vermessen werden. Insofern eignen sich als optisch erfassbare Markierungen für das erfindungsgemäße Verfahren insbesondere solche Objekte, die vordefinierte Abmessungen besitzen und/oder zumindest optisch erfassbare Charakteristika bzw. Formen oder Zeichen aufweisen, so dass aus einer photographischen Erfassung der Markierung auf eine relative Position des Videosensors zu der Markierung geschlossen werden kann. Vorteilhaft ist zudem eine Erscheindungsform, welche von der Perspektive abhängt, aus welcher das Objekt und/oder das Charakteristikum erfasst wird. Gemäß dem erfindungsgemäßen Verfahren kann dem erkannten Objekt über die geometrische Abbildung ein Azimuthwinkel bezüglich der Hauptachse des Sensorsystems des Fahrzeugs zugeordnet werden. Dieser Winkel kann für ein mit dem Videosystem synchronisiertes erstes Sensorsystem verwendet werden, um über den zugehörigen Azimuthwinkel die Abstände und Konturinformationen des klassifizierten Objektes bzw. der erfassten Markierung zu erhalten. Da gemäß dem erfindungsgemäßen Verfahren relativ zum Fahrzeugumfeld feststehende Markierungen für einen Abgleich von zeitlich aufeinanderfolgend aufgenommenen Daten Verwendung finden können, ist es stets möglich, aus einem einzelnen Video-Datensatz sowohl die Position des Fahrzeugs bzw. des ersten Sensorsystems sowie des Videosystems relativ zu der Markierung und somit auch gegenüber dem Fahrzeugumfeld festzustellen. Hierdurch erleichtert sich die Korrelation zweier zeitlich aufeinanderfolgend aufgenommener Datensätze, da die erfasste Markierung jeweils quasi als "Ankerpunkt" verwendet werden kann und aus der Änderung der relativen Position des Fahrzeugs zur Markierung quasi eine Transformationsvorschrift ermittelt werden kann, mithilfe welcher mittels des ersten Sensorsystems zu einem ersten Zeitpunkt aufgenommene Daten in zu einem zweiten Zeitpunkt aufgenommene Daten mit veränderter Perspektive überführt werden können. Somit kann für die Bildung der digitalen Abbildung eines Fahrzeugumfeldes eine Integration der Messdaten über der Zeit vorgenommen werden, wodurch Fehlereinflüsse -gleich welcher Art- erkannt, vermindert und gegebenenfalls korrigiert werden können.

Die Unteransprüche zeigen bevorzugte Weiterbildungen der Erfindung.

Vorzugsweise kann ein Abgleich zweier vom ersten Sensorsystem aufgenommener Datensätze durchgeführt werden. Durch Synchronisation des ersten Sensorsystems mit dem fahrzeugbasierten Videosystem können Datensätze, welche von jeweils dem einen oder dem anderen System zeitgleich aufgenommen worden sind, verwendet werden, um jeweils aus dem einen Datensatz erhaltene Informationen bei der Auswertung des jeweils anderen Datensatzes zu verwenden. Beispielsweise kann die optisch erfassbare Markierung, welche mittels des fahrzeugbasierten Videosystems aufgenommen worden ist, mittels eines Algorithmus' zur Gegenstandserkennung hinsichtlich ihrer Ausrichtung und Position zum Videosystem im Aufnahmezeitpunkt untersucht werden. Die für das Videosystem ermittelte relative Position und Ausrichtung der Markierung kann durch Berücksichtigung eines konstanten Parameters ("Offset"), nämlich dem Abstand zwischen dem ersten Sensorsystem und dem Videosystem hinsichtlich ihres Einbauortes im Fahrzeug, in die Position des ersten Sensorsystem überführt werden. Dieser Zusammenhang ist selbstverständlich zeitunabhängig. Insofern gilt er auch zu einem späteren Zeitpunkt, wenn die relative Position der Markierung zum Fahrzeug bzw. zu den Sensorsystemen sich aufgrund der Fortbewegung des Fahrzeugs verändert hat. Aufgrund der optischen Erkennung der optisch erfassbaren Markierung ist es möglich, für die veränderte Position des Fahrzeugs im ersten und zweiten Aufnahmezeitpunkt eine Transformationsvorschrift zur Anwendung auf die entsprechenden Datensätze zu ermitteln, mit welcher diese ineinander überführt werden können. Anschließend kann eine Korrelation durchgeführt werden, welche aufgrund der zuvor beschriebenen Vorgehensweise deutlich einfacher ausfällt, als wenn sie ohne ein Vorwissen über die den Datensätzen zugrundeliegende Aufnahmepositionen und -perspektiven vorzunehmen wäre. Die Korrelation kann hierbei erweitert werden oder ersetzt werden durch eine Glättung der Datensätze, eine Mittelwertbildung oder einen Schritt zur Plausibilisierung einander entsprechender Datenpunkte, welche aus dem Fahrzeugumfeld aufgenommen worden sind. Ein Vorteil des vorstehend beschriebenen Verfahrens ist eine Erhöhung der Genauigkeit der Datenverarbeitung. Mögliche weitere Vorteile sind eine Reduktion des Rechenaufwandes sowie eine Reduktion der erforderlichen Speicherressourcen. Zudem können sich bewegende Objekte im Fahrzeugumfeld schneller erkannt werden.

Weiterhin vorteilhaft kann der Bereich des Fahrzeugumfeldes, für welchen Messdaten mittels des fahrzeugbasierten ersten Sensorsystems aufgenommen werden, anhand des vom fahrzeugbasierten Videosystem erfassten Winkelbereichs definiert werden. Mit anderen Worten wird mittels des ersten Sensorsystems nur derjenige Anteil des Fahrzeugumfeldes erfasst, für welchen auch das Videosystem brauchbare Messwerte aufnehmen kann. Ein Vorteil des vorstehend beschriebenen Verfahrens ist dabei eine weitere Reduktion der zu verarbeitenden Datenmenge.

Gemäß einem weiteren Aspekt der vorliegenden Erfindung wird ein System zur Erstellung einer digitalen Abbildung eines Fahrzeugumfeldes zur Verfügung gestellt. Dabei umfasst das System ein fahrzeugbasiertes erstes Sensorsystem, welches beispielsweise Radar-, Lidar-, Ultraschall- und Laser bzw. Lasersensoren aufweisen kann. Ebenfalls kann das erste Sensorsystem eine Wärmekamera oder eine optische Bilderfassungseinrichtung umfassen. Des Weiteren umfasst das System ein fahrzeugbasiertes Videosystem, welches beispielsweise bereits für Parkassistenzsysteme und/oder Verkehrszeichenerkennung in Serie im Einsatz ist. Des Weiteren umfasst das System Speichermittel wie beispielsweise einen Flash-Speicher oder eine Festplatte. Eine Auswerteeinheit ist vorgesehen, um die logischen Schritte des erfindungsgemäßen Verfahrens durchzuführen. Hierzu kann die Auswerteeinheit einen Prozessor umfassen. Das fahrzeugbasierte erste Sensorsystem ist eingerichtet, Messdaten des Fahrzeugumfeldes aufzunehmen, welche beispielsweise als Kartenmaterial in einem Fahrerassistenzsystem oder einem System zum autonomen Fahren bzw. Rangieren eines Fahrzeugs Verwendung finden können. Das fahrzeugbasierte Videosystem ist eingerichtet, mindestens eine fest im Fahrzeugumfeld angeordnete und optisch erfassbare Markierung aufzunehmen, wobei hinsichtlich der optisch erfassbaren Markierung das in Verbindung mit dem erfindungsgemäßen Verfahren Gesagte entsprechend gilt. Die Auswerteeinheit kann einen Prozessor umfassen und ist eingerichtet, ein optisch erfassbares Charakteristikum der mindestens einen Markierung in den Aufnahmedaten des Videosystems zu erkennen. Die Bandbreite der möglichen optisch erfassbaren Charakteristika im Sinne der vorliegenden Erfindung ist sehr breit und kann umfassend nur funktional begrenzt werden. Beispielsweise sind Straßenschilder, KFZ-Kennzeichentafeln, Signaleinrichtungen wie beispielsweise Ampeln und/oder Schranken, hinsichtlich mehrerer Charakteristika bekannt und/oder vergleichsweise leicht erkennbar. Wird ein solches Charakteristikum mittels einer einfachen 2D-Kamera als Videosystem aufgenommen, lässt sich mit vergleichsweise einfachen Mitteln anhand der Perspektive während des Aufnahmezeitpunktes auf eine bestimmte relative Position des Fahrzeugs bzw. des Videosystems zur Markierung schließen. Aus dieser relativen Position bzw. Ausrichtung der Markierung zum Fahrzeug kann wiederum auf eine bestimmte Position und/oder Ausrichtung des Fahrzeugs zu seiner Umgebung geschlossen werden. Werden auf diese Weise während der Bewegung des Fahrzeuges zu zwei aufeinanderfolgenden Zeitpunkten mehrere Datensätze ermittelt, so kann aus der Veränderung der jeweiligen Perspektive auf die Markierung in den VideoDaten eine Transformationsvorschrift erstellt werden, anhand welcher auch zeitgleich mittels des ersten Sensorsystems aufgenommene Datensätze nach dieser Transformationsvorschrift ineinander zu überführen. Im Ergebnis ermöglicht es die vorliegende Erfindung der Auswerteeinheit, mit vergleichsweise geringem Aufwand eine Fehlererkennung in Datensätzen vorzunehmen, welche mittels des ersten Sensorsystems aufgenommen worden sind. Somit werden für die Fehlererkennung in der Auswerteeinheit erforderlichen Systemressourcen verringert sowie Energieverbrauch und Wärmeentwicklung verringert.

Erfindungsgemäß ist weiter vorgesehen, dass das Speichermittel eingerichtet sein kann, Daten über mindestens ein optisch erfassbares Charakteristikum der mindestens einen vordefinierten Markierung zu speichern. Dieser Vorgang des Speicherns kann beispielsweise bereits vor der Inbetriebnahme des erfindungsgemäßen Systems erfolgen, wobei dem System sozusagen ein Repertoire von vordefinierten Markierungen an die Hand gegeben wird, anhand welcher es ausschließlich oder lediglich bevorzugt die Erstellung digitaler Abbildungen eines Fahrzeugumfeldes unterstützen kann. Alternativ oder zusätzlich kann während des Betriebs des Systems einem Anwender durch Anzeigen auf einem Display vorgeschlagen werden, die Erstellung einer digitalen Abbildung eines Fahrzeugumfeldes anhand einer optisch hervorgehobenen Markierung durchzuführen. Bestätigt der Anwender beispielsweise durch Betätigen eines Touch-Screens die vorgeschlagene Markierung, werden die oben genannten Schritte anhand dieser Markierung durchgeführt.

Weiter kann die Auswerteeinheit eingerichtet sein, einen Abgleich zweier vom ersten Sensorsystem aufgenommener Datensätze durchzuführen und dabei mit identischen Punkten im Fahrzeugumfeld korrespondierende Datensätze einander zuzuordnen, indem sie die relative Position bzw. Ausrichtung der Markierung bzw. ihrer Veränderung zwischen den Aufnahmezeitpunkten relativ zum Fahrzeugumfeld verwendet.

Zudem kann die Auswerteeinheit eingerichtet sein, den Bereich des Fahrzeugumfelds, für welchen Messdaten mittels des fahrzeugbasierten ersten Sensorsystems aufgenommen werden sollen, anhand des vom Videosystem erfassten Winkelbereichs zu definieren und/oder eine entsprechende Vorgabe dahingehend umzusetzen, dass nur in einem gewissen Bereich, welcher vom Videosystem erfasst wird, auch Daten mittels des ersten Sensorsystems erfasst und/oder gespeichert werden. Dies reduziert die zu verarbeitende Datenmenge und notwendige Systemressourcen.

Vorzugsweise kann in dem erfindungsgemäßen System sowie dem erfindungsgemäßen Verfahren ein Mono-Videosystem zum Einsatz kommen, wie es beispielsweise für Verkehrsschilderkennungen und Parkassistenzsysteme bereits in Serie zum Einsatz kommt. Dies reduziert die System komplexität und Bauteilkosten. Alternativ und/oder zusätzlich kann ein Stereo-Videosystem als erstes Sensorsystem zum Einsatz kommen, wobei aus dem Stereo-Videobild Abstandsdaten für die Erstellung einer digitalen Abbildung eines Fahrzeugumfeldes ermittelt werden. Hierbei kann das fahrzeugbasierte Videosystem zur optischen Erfassung einer Markierung als (Mono-)Anteil des Stereo-Videosystems vorgesehen sein, wobei sich auch der Offset zwischen dem Videosystem und dem ersten Sensorsystem verringern kann. Ein so ausgestaltetes fahrzeugbasiertes Sensorsystem ermöglicht eine besonders hohe Auflösung sowie eine farbgetreue Abbildung des Fahrzeugumfeldes. Alternativ und/oder zusätzlich kann jedes bekannte System oder Verfahren, beispielsweise auch umfassend eine Triangulation, zur Entfernungsmessung zum Einsatz kommen.

Insbesondere wenn das Fahrzeugumfeld eine vorgegebene Topographie wie beispielsweise einen Parkplatz, ein Parkhaus, einen Flughafen oder einen Flugzeugträger umfasst, können vordefinierte Markierungen als optisch erfassbare Markierungen vorgesehen werden, deren optisch erfassbare Charakteristika sich besonders gut für eine Erfassung mittels eines zum Einsatz kommenden Videosystems eignen. Hierdurch kann die Falscherkennung einer bestimmten Perspektive und/oder Position des Fahrzeugs relativ zu der vordefinierten Markierung vermindert werden.

Gemäß einem weiteren Aspekt der vorliegenden Erfindung wird ein Assistenzsystem zum automatisierten Parken eines Fahrzeugs und/oder zum Unterstützen eines Fahrers während der Bewegung eines Fahrzeugs vorgeschlagen, wobei das Assistenzsystem ein System mit den vorstehend diskutierten Merkmalen umfasst bzw. eingerichtet ist, ein Verfahren mit den vorstehend diskutierten Merkmalen auszuführen.

Hierbei profitiert das Assistenzsystem von einer reduzierten Fehlerwahrscheinlichkeit bei der Ermittlung des Fahrzeugumfeldes bzw. innerhalb der verwendeten Umfelddaten.

### Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine systematische Übersicht über die wichtigsten Bestandteile eines Ausführungsbeispiels eines Systems gemäß der vorliegenden Erfindung;
- Figur 2a: ein Beispiel für eine Momentaufnahme eines Fahrzeugumfeldes mit einer Fehlstelle;
- Figur 2b: ein Beispiel für eine Momentaufnahme eines Fahrzeugumfeldes mit einer Korrekturstelle;
- Figur 2c: das in Figur 2b gezeigte Fahrzeugumfeld nach einer alternative Ortsänderung des fahrzeugbasierten Videosystems;
- Figur 3: ein Flussdiagramm der Verfahrensschritte eines bevorzugten Ausführungsbeispiels für das erfindungsgemäße Verfahren.

### Ausführungsform der Erfindung

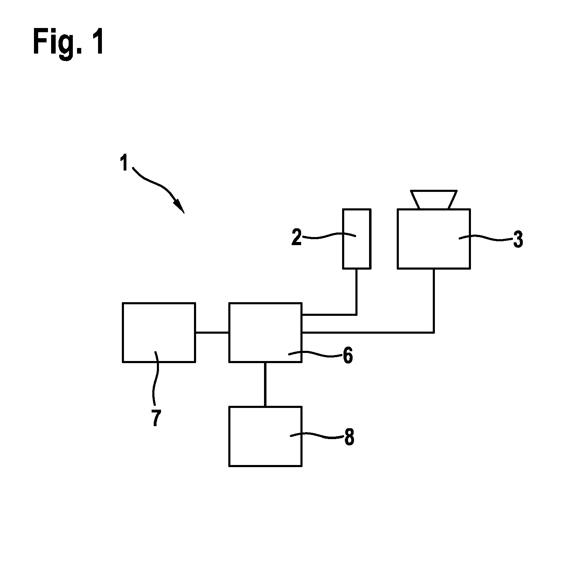

Figur 1 zeigt den schematischen Aufbau eines bevorzugten Ausführungsbeispiels für ein erfindungsgemäßes System 1 zur Erstellung einer digitalen Abbildung eines Fahrzeugumfeldes U. Als Bestandteil des ersten Sensorsystems ist ein erster Sensor 2 vorgesehen, der im dargestellten Ausführungsbeispiel ein Radarsensor ist. Der erste Sensor 2 ist mit einer Auswerteeinheit 6 verbunden, welche die aufgenommenen Daten sammelt und verarbeitet. Des Weiteren ist ein Videosensor 3 als Bestandteil eines fahrzeugbasierten Videosystems vorgesehen und ebenfalls mit der Auswerteeinheit 6 verbunden. Auch die Daten des Videosensors 3 werden von der Auswerteeinheit 6 gesammelt und verarbeitet. Des Weiteren sind Speichermittel 8 mit der Auswerteeinheit 6 verbunden, so dass die Auswerteeinheit einerseits Daten in die Speichermittel 8 schreiben kann, andererseits Daten aus den Speichermitteln 8 abrufen kann. Zudem ist ein Betriebszustandsgeber 7 vorgesehen, welcher Betriebsparameter des Fahrzeugs gemäß dem aktuellen Betriebszustand ermittelt und an die Auswerteeinheit 6 weiterleiten kann. Hierdurch ist es der Auswerteeinheit 6 möglich, weitere Informationen wie z.B. Gewindigkeit und Odometriedaten in die Auswertung der Sensordaten einzubeziehen. Diese Daten können beispielsweise die aktuelle Fahrzeuggeschwindigkeit, einen aktuellen Lenkeinschlag sowie weitere Informationen zu Positionierung (GPS-Signale) und anderen Informationen beinhalten. Die dargestellten Komponenten des Systems können selbstverständlich auch von anderen Einheiten oder Systemen des Fahrzeugs verwendet werden bzw. anderen Systemen originär zugeordnet sein und von ihnen verwendet werden.

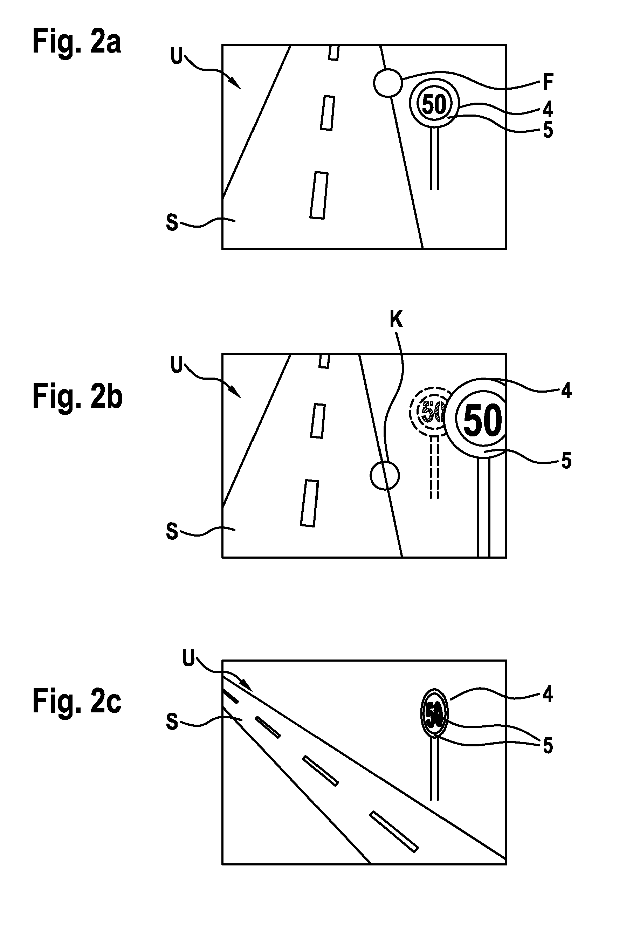

Figur 2a zeigt eine mögliche Ansicht eines Fahrzeugumfeldes U, wie es von einem Videosensor 3 erfasst werden könnte. Hierin dargestellt ist eine Straße S, wobei sich das Fahrzeug (nicht dargestellt) in Fahrtrichtung ausgerichtet befindet. Rechts der Straße S befindet sich ein Verkehrsschild, welches auf eine Geschwindigkeitsbegrenzung hinweist. Das Verkehrsschild kann als Markierung 4 in einem erfindungsgemäßen System bzw. Verfahren verwendet werden. Als Beispiel für ein hierbei verwendetes Charakteristikum 5 ist das äußere Kreisringsegment auf der Vorderseite des Schildes gegeben. Da die Größe bzw. der Durchmesser von Verkehrsschildern in Abhängigkeit der Geschwindigkeitsbereiche auf dem jeweiligen Streckenabschnitt normiert ist, ist aufgrund des Abstandes zwischen dem oberen und dem unteren Rand des Verkehrszeichens bereits auf eine Entfernung des Videosensors 3 von der Position des Verkehrszeichens schließen. Eine solche Ermittlung des Abstandes könnte beispielsweise in einer Auswerteeinheit durchgeführt werden, welche eine Erkennung und Bestimmung von Bildbestandteilen durchführen kann. Weiter gezeigt ist ein Fehler F an einer Stelle, an welcher keine Daten bzw. gestörte Daten im Bild vorhanden sind.

Figur 2b zeigt eine mögliche Ansicht eines Fahrzeugumfeldes U, wie sie vom Videosensor 3 zu einem Zeitpunkt erfasst werden könnte, welcher dicht auf den Zeitpunkt folgt, zu welchem die Ansicht nach Figur 2a ermittelt worden ist. Durch die Bewegung des Fahrzeugs in Fahrtrichtung ist das Verkehrszeichen als Markierung 4 dem Videosensor 3 näher. Es erscheint daher größer und in einem weiter außen liegenden Bildbereich. Darüber hinaus hat sich das Verhältnis zwischen einer vertikalen und einer horizontalen Erstreckung der Außenkontur des Verkehrszeichens und somit auch des Charakteristikums 5 dahingehend verändert, dass sich die horizontale Erstreckung in Relation zur vertikalen Erstreckung des Charakteristikums 5 verringert hat. Eine solche Veränderung erklärt sich aufgrund trigonometrischer Überlegungen und dem Fakt, dass das Verkehrszeichen aus einer im Wesentlichen ebenen Kreisscheibe besteht, deren Projektionsfläche vom Betrachtungswinkel (Azimuth) abhängt. In Abhängigkeit der Höhe der Position des Videosensors 3 relativ zum Verkehrszeichen als Markierung 4 kann sich aufgrund ähnlicher Überlegungen auch eine Veränderung der vertikalen Erstreckung des Charakteristikums 5 einstellen. Weiter im Bild gezeigt ist eine Stelle mit (Korrektur-)Daten K, an welcher Stelle in Figur 2a der Fehler F vorliegt. Da die in Figur 2b dargestellten Daten keinen Fehler F aufweisen, kann der in Figur 2a dargestellte Fehler F korrigiert werden, indem die Korrekturdaten K der Figur 2b an der Stelle des Fehlers F "eingepasst" werden. Erfindungsgemäß wird dieser Vorgang erleichtert, bei welchem Datenbereiche eines aufgenommenen Datensatzes entsprechenden Datenbereichen in einem zweiten Datensatz zugeordnet werden können.

Figur 2c zeigt eine weitere mögliche Ansicht eines Fahrzeugumfeldes U, welche sich einstellt, wenn das Fahrzeug gegenüber der in Figur 2a dargestellten Situation eine andere Position und Ausrichtung gegenüber dem Verkehrszeichen als Markierung 4 eingenommen hat. Zwar ist der Abstand des Videosensors 3 zur Markierung 4 im Wesentlichen ähnlich, jedoch hat sich die Perspektive auf die Markierung 4 stark verändert, so dass das Verhältnis sich zwischen horizontaler Erstreckung und vertikaler Erstreckung des Verkehrszeichens bzw. des Charakteristikums 5 zugunsten der vertikalen Erstreckung in Figur 2c geändert hat. Indem die Auswerteeinheit 6 diese perspektivische Veränderung anhand der Markierung 4 in den Videodaten erkennen und quantifizieren kann, ist eine Korrektur des in Figur 2a dargestellten Fehlers F auch anhand der Korrekturdaten K aus Figur 2c möglich. Zur Erkennung, ob es sich in den verschiedenen Datensätzen um ein und dasselbe Verkehrsschild handelt, kann die Auswerteeinheit 6 die Odometriedaten verwenden, aufgrund welcher eine grobe räumliche Zuordnung der dargestellten Situationen durchgeführt werden kann.

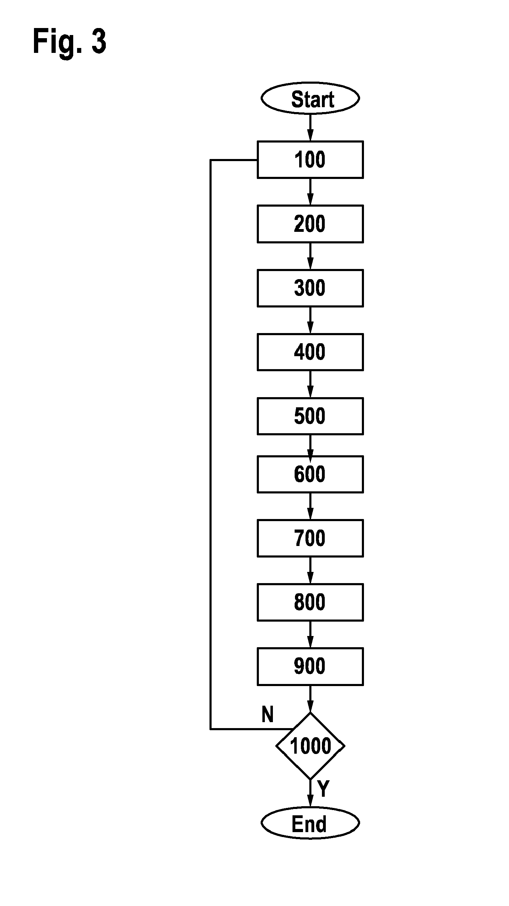

Figur 3 zeigt ein Ablaufdiagramm, visualisierend die Schritte nach einem bevorzugten Ausführungsbeispiel des erfindungsgemäßen Verfahrens. Nach dem Start des Verfahrens wird im Schritt 100 ein erster Datensatz mit der ersten Sensoreinheit bzw. dem ersten Sensor 2 erfasst. Im Schritt 200 wird zeitgleich ein erster Datensatz mit einem Videosystem bzw. Videosensor 3 erfasst. In Schritt 300 wird der mittels des Videosystems aufgenommene Datensatz auf vorbestimmte Markierungen 4 hin untersucht. Hierzu können bekannte Algorithmen zur optischen Gegenstandserkennung verwendet werden. In Schritt 400 wird ein zweiter Datensatz mittels des ersten Sensorsystems bzw. des ersten Sensors 2 erfasst. In Schritt 500 wird ein zweiter Datensatz mittels des Videosystems bzw. des Videosensors 3 erfasst. In Schritt 600 wird der mithilfe des Videosystems ermittelte zweite Datensatz auf vorbestimmte Markierungen hin untersucht. In Schritt 700 wird aus der perspektivischen Veränderung sowie einer Veränderung der Position des Fahrzeugs bzw. der an Bord befindlichen Sensorsysteme eine Transformationsvorschrift erstellt, anhand welcher die mittels des ersten Sensorsystems ermittelten Datensätze miteinander korreliert und gegebenenfalls ineinander überführt werden können. Hierzu wird eine Veränderung der Abbildung einer vorbestimmten Markierung 4 in den mittels des Videosystems aufgenommenen Datensätzen detektiert und als Transformationsvorschrift auf die mittels des ersten Sensorsystems ermittelten Daten angewendet. Mit anderen Worten wird in Schritt 700 eine Zuordnung und/oder eine Korrelation zweier mittels des ersten Sensorsystems erstellter Datensätze durchgeführt. In Schritt 800 werden Abweichungen zwischen einander entsprechenden Daten festgestellt und anhand im Stand der Technik bekannter Verfahren zum Abgleich bzw. zur Glättung und Plausibilisierung von Messdaten konsolidiert. Anschließend wird in Schritt 900 der Datensatz als Ergebnis des erfindungsgemäßen Verfahrens zur Erstellung einer digitalen Abbildung eines Fahrzeugumfeldes U in den Speichermitteln 8 abgespeichert. In Schritt 1000 wird ermittelt, ob eine Abbruchbedingung für den Verfahrensablauf erfüllt (Y) oder nicht erfüllt (N) ist. Eine solche Abbruchbedingung kann beispielsweise durch eine Anwendereingabe oder ein stoppendes Fahrzeug, aufgrund dessen keine weiteren Ermittlungen von Datensätzen erforderlich erscheinen, sein. Ist die Abbruchbedingung nicht erfüllt (N), fährt das Verfahren mit der Durchführung des Schrittes 100 fort. Andernfalls (Y) endet das Verfahren.

Kerngedanke der vorliegenden Erfindung ist es, eine Korrelation mittels eines ersten Sensorsystems aufgenommener Daten dadurch zu erleichtern bzw. zu vereinfachen, dass mittels eines Videosystems erfasste ortsfeste Markierungen ("Landmarken") erfasst werden. Erfindungsgemäß werden die Markierungen 4 anhand mindestens eines optisch erfassbaren Charakteristikums 5 untersucht, um aus der relativen Position bzw. Orientierung des Videosystems zu der Markierung 4 auf eine Veränderung der Perspektive des ersten Sensors 2 bzw. des ersten Sensorsystems gegenüber dem Fahrzeugumfeld U zu schließen. Mit anderen Worten wird mittels des Videosystems jeweils ein "Ankerpunkt" in Datensätzen ermittelt, der Aufschluss über Position und Perspektive eines ersten Sensorsystems zu entsprechenden Aufnahmezeitpunkten ermöglicht. Hierdurch kann ausgehend von dem Ankerpunkt ein Abgleich mehrerer, aus unterschiedlichen Perspektiven aufgenommener Datensätze vereinfacht erfolgen.

Während die Aspekte und Merkmale der vorliegenden Erfindung anhand der beigefügten Zeichnung beispielhaft und detailliert beschrieben worden sind, so bleibt der Schutzbereich der vorliegenden Erfindung allein durch die Merkmale der beigefügten Ansprüche definiert.

## Patentansprüche

1. Verfahren zur Erstellung einer digitalen Abbildung eines Fahrzeugumfeldes (U), insbesondere für Fahrerassistenzsysteme und autonomes Fahren, wobei
- mit einem fahrzeugbasierten ersten Sensorsystem (2) Messdaten des Fahrzeugumfeldes (U) aufgenommen werden und
- mit einem fahrzeugbasierten Video-System (3) mindestens eine fest im Fahrzeugumfeld (U) angeordnete und optisch erfassbare Markierung (4) aufgenommen wird,
- wobei mindestens ein optisch erfassbares Charakteristikum (5) der mindestens einen Markierung (4) aus den Aufnahmedaten des Video-Systems (3) erkannt wird, und wobei die relative Position und/oder Ausrichtung der mindestens einen Markierung (4) zum Fahrzeug ermittelt wird.

2. Verfahren nach Anspruch 1, wobei ein Abgleich zweier vom ersten Sensorsystem (2) aufgenommener Datensätze durchgeführt wird, und wobei der Abgleich unterstützt wird, indem in den Datensätzen enthaltene Daten, welche jeweils zu einem gemeinsamen Punkt im Fahrzeugumfeld (U) korrespondieren, einander zugeordnet werden, indem die relative Position und/oder Ausrichtung der Markierung (4) oder mehrerer Markierungen (4) zum Fahrzeug verwendet wird.

3. Verfahren nach einem der vorhergehenden Ansprüche, wobei der Bereich des Fahrzeugumfeldes (U), für welchen Messdaten mittels des fahrzeugbasierten ersten Sensorsystems (2) aufgenommen werden, anhand des vom fahrzeugbasierten Video-System (3) erfassten Winkelbereichs definiert wird.

4. System zur Erstellung einer digitalen Abbildung eines Fahrzeugumfeldes (U), insbesondere für Fahrerassistenzsysteme und autonomes Fahren, umfassend:
- ein fahrzeugbasiertes erstes Sensorsystem (2);
- ein fahrzeugbasiertes Video-System (3);
- eine Auswerteeinheit (7);
- wobei das fahrzeugbasierte erste Sensorsystem (2) eingerichtet ist, Messdaten des Fahrzeugumfeldes (U) aufzunehmen, und
- das fahrzeugbasierte Video-System (3) eingerichtet ist, mindestens eine fest im Fahrzeugumfeld (U) angeordnete und optisch erfassbare Markierung (4) aufzunehmen, wobei
- die Auswerteeinheit (6) eingerichtet ist, mindestens ein optisch erfassbares Charakteristikum (5) der mindestens einen Markierung (4) aus den Aufnahmedaten des Video-Systems (3) zu erkennen und die relative Position und/oder Ausrichtung der mindestens einen Markierung (4) zum Fahrzeug zu ermitteln.

5. System nach Anspruch 4, weiter umfassend Speichermittel (8), die eingerichtet sind, mindestens ein optisch erfassbares Charakteristikum (5) einer vordefinierten Markierung (4) zu speichern.

6. System nach einem der vorhergehenden Ansprüche 4 bis 5, wobei die Auswerteeinheit (6) eingerichtet ist,
- einen Abgleich zweier vom ersten Sensorsystem (2) aufgenommener Datensätze durchzuführen, und
- bei diesem Abgleich in den Datensätzen enthaltene Daten, welche zu einem gemeinsamen Punkt im Fahrzeugumfeld (U) korrespondieren, einander zuzuordnen, indem sie die relative Position und/oder Ausrichtung der Markierung (4) zum Fahrzeug verwendet.

7. System nach einem der Ansprüche 4 bis 6, wobei die Auswerteeinheit eingerichtet ist, den Bereich des Fahrzeugumfelds (U), für welchen Messdaten mittels des fahrzeugbasierten ersten Sensorsystems (2) aufgenommen werden, anhand des vom fahrzeugbasierten Video-System (3) erfassten Winkelbereichs zu definieren.

8. Verfahren nach Anspruch 1 bis 4 oder System nach Anspruch 5 bis 8 wobei das Video-System (3) ein Mono-Video-System umfasst, insbesondere ein Mono-Video-System ist oder ein Stereo-Video-System umfasst, insbesondere ein Stereo-Video-System ist.

9. Verfahren nach einem der vorhergehenden Ansprüche 1 bis 3 oder 8 oder System nach einem der vorhergehenden Ansprüche 4 bis 8, wobei die Markierung (4) aus einer Anordnung verschiedener Objekte der Fahrzeugumgebung besteht und das optisch erfassbare Charakteristikum (5) Abstände der Objekte und/oder Größenverhältnisse der Objekte zueinander umfasst.

10. Assistenzsystem zum automatisierten Parken eines Fahrzeugs und/oder Unterstützen eines Fahrers während der Bewegung des Fahrzeugs, wobei das Assistenzsystem ein System nach einem der vorstehenden Ansprüche 5 bis 9 umfasst.
